(19)

**Europäisches Patentamt**

**European Patent Office**

**Office européen des brevets**

(11) **EP 4 329 382 A1**

(12) **EUROPEAN PATENT APPLICATION**

(43) Date of publication:
**28.02.2024 Bulletin 2024/09**

(21) Application number: **22192063.0**

(22) Date of filing: **25.08.2022**

(51) International Patent Classification (IPC):
**H04W 52/02** (2009.01)   **G06F 1/28** (2006.01)
**G06F 1/3212** (2019.01)   **G06F 1/3209** (2019.01)

(52) Cooperative Patent Classification (CPC):
**G06F 1/28; G06F 1/3209; G06F 1/3212;**
**H04W 52/0209; H04W 4/70**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Aloxy NV**
**2000 Antwerpen (BE)**

(72) Inventors:
  • **Weyn, Maarten**
    **2540 Hove (BE)**

  • **Ergeerts, Glenn**
    **2018 Antwerp (BE)**
  • **Coppens, Jan**
    **9820 Merelbeke (BE)**
  • **Oorts, Liam**
    **2900 Schoten (BE)**
  • **Jonkers, Bart**
    **2940 Hoevenen (BE)**
  • **Schram, Kwinten**
    **2000 Antwerp (BE)**
  • **Finnegan, Joseph**
    **2000 Antwerp (BE)**

(74) Representative: **IP HILLS NV**
**Hubert Frère-Orbanlaan 329**
**9000 Gent (BE)**

(54) **POWER TRACKING OF AN IOT DEVICE**

(57)    Example embodiments relate a computer implemented method (200) for determining a remaining energy (214) of a battery powering an internet of things, IoT, device. The method comprising obtaining (201) amounts of time (231, 232, 233, 234, 235) that the IoT device operated in respective operational states (221, 222, 223, 224). The method further comprising determining (202) a consumed energy (213) based on predetermined characteristic power consumptions (251, 252, 253, 254) of the IoT device in the respective operational states and the amounts of time operated therein. The method further comprising determining (203) the remaining energy (214) of the battery based on a preceding remaining energy (215) of the battery and the consumed energy (213). Further example embodiments describe a computing device configured to perform the computer implemented method.

Fig. 2

## Description

## Field of the Invention

The present invention generally relates to, amongst others, monitoring a battery powering an IoT device.

## Background of the Invention

An internet of things, IoT, device may be any device that connects to a network and has the ability to process and/or transmit data. An IoT device is typically powered by a battery which periodically requires maintenance to keep the IoT device operational, e.g. replacing the battery before it runs out of energy. As such, the remaining energy in the battery of an IoT device is typically monitored.

Existing methods for estimating the remaining energy of a battery can consume a non-negligible amount of energy from the battery, in addition to the energy consumed to power the IoT device. This can result in increased costs as batteries with a larger capacity have to be used to provide the additional energy. It is thus a problem to limit the energy consumption of estimating the remaining energy of a battery powering an IoT device.

Access to an IoT device for maintenance can be limited to certain periods of time, e.g. when the IoT device is installed in an area with restricted access or when operation of the IoT device cannot be interrupted at will. Planning the timely maintenance of the battery before it runs out of energy can thus be a problem.

## Summary of the Invention

It is an object of the present invention, amongst others, to solve or alleviate the above identified challenges and problems by improving the estimation of the remaining energy in a battery powering an IoT device.

According to a first aspect, this object is achieved by a computer implemented method for determining a remaining energy of a battery powering an internet of things, IoT, device. The computer implemented method comprising obtaining amounts of time that the IoT device operated in respective operational states. The computer implemented method further comprising determining a consumed energy based on predetermined characteristic power consumptions of the IoT device in the respective operational states and the amounts of time operated therein. The computer implemented method further comprising determining the remaining energy of the battery based on a preceding remaining energy of the battery and the consumed energy.

The operation of an IoT device is thus divided in distinct operational states. An operational state of an IoT device may for example be related to, amongst others, transmitting data, receiving data, decoding data, executing one or more algorithms, operation of light-emitting diodes, LEDs, conducting measurements, or a standby mode. An IoT device may operate in different operational states at the same time.

The respective operational states have a predetermined characteristic power consumption, e.g. an average power consumption, which may be determined during a characterizing phase preceding the commissioning of the IoT device. The IoT device may be configured to track the amount of time that the IoT device operates in the respective operational states, thereby obtaining the amounts of time. This allows determining the consumed energy for each respective operational state and thus determining the energy consumed between successively obtained amounts of time. The remaining energy of the battery can then be determined by subtracting the consumed energy from the preceding remaining energy of the battery, i.e. the previously determined remaining energy or the initial energy of the battery.

The amounts of time may be tracked by computer program code, e.g. software or firmware, running on the IoT device. This allows reducing the circuitry and/or electronic components included in the IoT device as no physical measurements on the battery are required such as, for example, current or voltage measurements. This has the advantage that the IoT device can be made lighter, smaller, and cheaper. Determining the remaining energy of the battery based on amounts of time that the IoT device operated in respective operational states allows limiting the energy consumption associated with estimating the remaining energy of a battery. This has the further advantage that the lifetime of the battery is extended and/or that cheaper batteries with a smaller capacity can be used. It is a further advantage that the computer implemented method is easily implemented into existing IoT devices, e.g. by an update of its computer program code.

According to an embodiment, the computer implemented method may further comprise determining an initial energy of the battery based on one or more charging conditions and/or storage conditions of the battery.

The initial energy may refer to the remaining energy in the battery upon first use of the battery, e.g. when starting to power an IoT device. The charging conditions and storage conditions of a battery may substantially influence the initial energy, which is the reference point for determining the remaining energy of the battery. As such, determining the initial energy based on the charging conditions and/or storage conditions results in a more accurate initial energy and results in a more accurate remaining energy, as the accuracy of the initial energy may be propagated to the following determinations of the remaining energy.

Charging conditions may include, amongst others, the ambient temperature during charging, the charging current rate, the charging current, and/or the charge voltage. Storage conditions may include, amongst others, the ambient temperature at which the battery was stored, the state of charge at which the battery was stored, and the amount of time the battery was stored.

According to an embodiment, the computer implemented method may further comprise determining a usable energy of the battery based on the remaining energy and on one or more operational conditions of the IoT device.

The usable energy may refer to a portion of the energy stored in the battery, i.e. the remaining energy, that can be used to power the IoT device under certain operational conditions. The usable energy may be equal to, or smaller than the remaining energy depending on the operational conditions of the IoT device such as, amongst others, ambient temperature and discharge current. Determining the usable energy can thus allow avoiding overestimations of the remaining energy available for powering the IoT device.

The operational conditions may be tracked by the IoT device in addition to the amounts of time. Alternatively, the operational conditions may be tracked by one or more sensors or other IoT devices configured to monitor the operational conditions in the vicinity of the IoT device. The tracked operational conditions may further be transmitted to a computing device that is configured to determine the remaining energy of the battery.

According to an embodiment, the computer implemented method may further comprise detecting an unexpected change in the consumed energy of the IoT device.

To this end, the consumed energy of the IoT device may be monitored in time. Upon determining a consumed energy that deviates substantially from an expected consumed energy, e.g. the average consumed energy, an unexpected change may be detected. An operator of the IoT device may be alerted of the unexpected change. This allows detecting IoT devices with an elevated power consumption, e.g. due to a malfunction, before a substantial amount of energy is drained from the battery. It is a further advantage that the operation of the IoT device is more reliable as an unexpected loss of signal due to a discharged battery can be avoided.

According to an embodiment, the computer implemented method may further comprise optimizing a power consumption of the IoT device based on a comparison between the consumed energy of the IoT device and the consumed energy of at least one other IoT device.

The power consumption of the IoT device may, for example, be optimized by adjusting the IoT device, by adjusting a network to which the IoT device belongs, or by adjusting the surroundings of the IoT device. The IoT device may, for example, be adjusted by changing the settings or adjusting the antenna of the IoT device. The network may, for example, be adjusted by changing the topology of the network, the nodes in the network, the location of the nodes in the network, or the configuration of the nodes in the network. The surroundings of the IoT device may, for example, be adjusted by removing or repositioning an object that disturbs or interferes with the data transmissions of the IoT device.

The other IoT devices may be substantially similar IoT devices, i.e. reference IoT devices configured for the same purpose, or substantially different IoT devices, i.e. reference IoT devices configured for a different purpose. The consumed energy of substantially different other IoT devices may be normalised to allow comparing with the energy consumption of the IoT device. These other IoT devices may further be included in the network of the IoT device or in a different network of IoT devices. Comparing the energy consumption pattern of the IoT device to the energy consumption pattern of the other IoT devices may thus allow identifying possible adjustments to optimize the power consumption of the IoT device. This has the further advantage that the lifetime of the battery can be extended and/or that cheaper batteries with a smaller capacity can be used.

According to an embodiment, the computer implemented method may further comprise predicting a remaining useful lifetime of the battery based on the remaining energy of the battery and an expected load profile of the IoT device.

The remaining useful lifetime of the battery may characterize the remaining time that the battery can continue to power the IoT device. The remaining useful lifetime may, for example, be expressed in hours, days, weeks, or months. The expected load profile of the IoT device may, for example, be an expected power consumption in time or a sequence of activated operational states in time. This allows predicting when battery maintenance, i.e. replacement or recharging, is required without consuming substantial energy from the battery in the IoT device. It is a further advantage that the operation of the IoT device is more reliable as an unexpected loss of signal due to a discharged battery can be avoided.

According to an embodiment, the remaining useful lifetime of the battery is characterized by the moment in time when the remaining energy of the battery drops below an energy threshold and/or a voltage of the battery drops below a voltage threshold.

In other words, the energy threshold may indicate a minimum remaining energy of the battery to power the IoT device and the voltage threshold may indicate a minimum voltage of the battery to power the IoT device.

According to an embodiment, the computer implemented method may further comprise forecasting the expected load profile of the IoT device based on one or more previous load profiles of at least one IoT device.

The at least one IoT device may be substantially similar or substantially different than the IoT device for which the expected load profile is forecasted. Alternatively, the expected load profile may be forecasted based on the previous load profile of the IoT device itself, i.e. the load profile of the IoT device up until the moment of performing the forecast.

According to an embodiment, the computer implemented method may further comprise scheduling a maintenance of the IoT device based on the predicted remaining useful lifetime of the battery.

As such, the maintenance of the IoT device can be scheduled during a period in which the operation of the IoT device is superfluous, i.e. optional. Such a period may, for example, be a period during which scheduled maintenance is performed to a device or process monitored by the IoT device, or a period during which a device or process monitored by the IoT device is not operational. The scheduled maintenance of the IoT device may comprise, amongst others, a replacement of a primary battery, or a recharge of a secondary battery. This allows to perform maintenance of the IoT device without losing data monitored by the IoT device. It is a further advantage that loss of signal from the IoT device due to a discharged battery can be avoided.

According to an embodiment, the computer implemented method may be performed by the IoT device.

In other words, in addition to tracking or logging the amounts of time, the IoT device may determine the consumed energy and the remaining energy of the battery powering the IoT device. Thus, the computer implemented method may be performed locally on the IoT device. The IoT device may be further configured to transmit the determined remaining energy to any other device, e.g. a device configured to monitor the remaining energy of one or more IoT devices.

According to an embodiment, the IoT device may be configured to transmit the amounts of time to a computing device through a wireless network, wherein the computer implemented method is performed by the computing device.

In other words, in addition to tracking or logging the amounts of time, the IoT device may transmit the amounts of time to a computing device to determine the consumed energy and the remaining energy of the battery powering the IoT device. Thus, the computer implemented method may be performed remotely, e.g. by means of cloud computing. This allows offloading the determining of the remaining energy of the battery from the IoT device, thereby further limiting the energy consumption associated with estimating the remaining energy of the battery. This has the further advantage that the lifetime of the battery is extended and/or that cheaper batteries with a smaller capacity can be used.

According to a second aspect, a computing device is disclosed configured to perform the computer implemented method according to the first aspect.

The computing device may be any apparatus that is capable of performing the computer implemented method such as, for example, a desktop, a laptop, a computing server, an IoT device, a network device, or any other suitable computing device known to the skilled person.

According to an embodiment, the computing device may be configured to obtain the amounts of time from one or more IoT devices through a wireless network.

The computing device may thus obtain the amounts of time that one or more IoT devices operated in respective operational states by means of messages or transmissions send by the respective IoT devices through the wireless network. The computing device may then determine the consumed energy and the remaining energy for the respective one or more IoT devices. This allows monitoring the batteries of a plurality of IoT devices in a wireless network.

According to a third aspect, a computer program is disclosed comprising instructions which, when the program is executed by a computer, cause the computer to perform the computer implemented method according to the first aspect.

According to a fourth aspect, a computer-readable medium is disclosed comprising instructions which, when executed by a computer, cause the computer to perform the computer implemented method according to the first aspect.

**Brief Description of the Drawings**

Fig. 1 shows an example network of one or more internet of things, IoT, devices;

Fig. 2 shows steps of a computer implemented method for determining a remaining energy of a battery powering an IoT device, according to an embodiment;

Fig. 3A shows an example of the usable energy in a battery in function of operational conditions;

Fig. 3B shows an example of a remaining useful lifetime prediction of a battery powering an IoT device based on an energy threshold, according to an embodiment;

Fig. 3C shows an example of a remaining useful lifetime prediction of a battery powering an IoT device based on a voltage threshold, according to an embodiment;

Fig. 3D shows an example of a detected unexpected change in the consumed energy of an IoT device, according to an embodiment;

Fig. 4 shows an example network of IoT devices configured to communicate with a gateway and a computing device through a wireless network, according to an embodiment;

Fig. 5 shows an example embodiment of a suitable computing system for performing steps according to example aspects of the disclosure.

## Detailed Description of Embodiment(s)

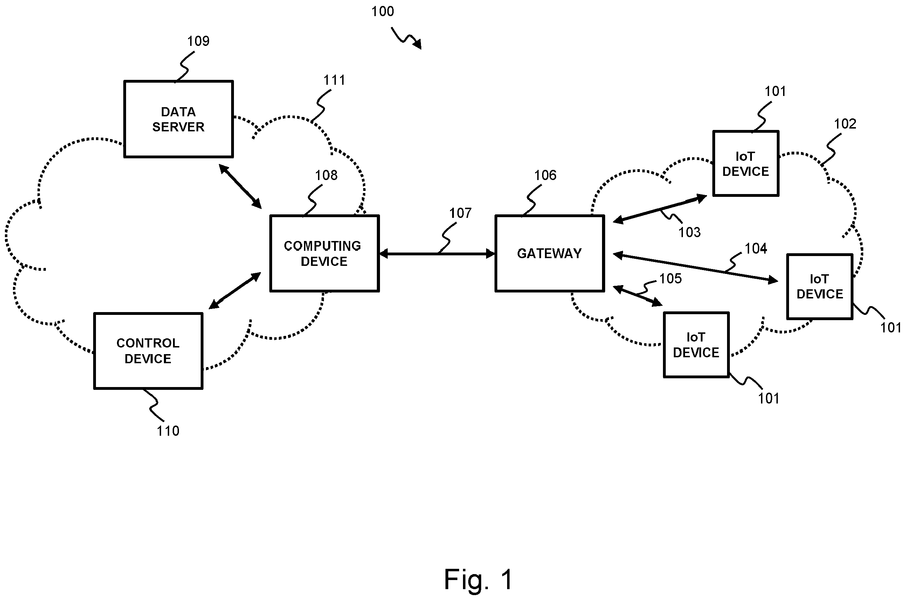

Fig. 1 shows an example network 100 of one or more internet of things, IoT, devices 101. An IoT device 101 may be any device that has the ability to process data and/or transmit data over a communications network. The IoT device 101 may be configured to measure and transmit data on one or more metrics. The IoT device 101 may, for example, be a separate device such as a sensor, an actuator, a gadget, or a dongle. Alternatively, the IoT device 101 may be embedded into an other device such as, a vehicle, an industrial device, a wearable device, or a medical device. The IoT devices 101 may be powered by a battery, e.g. a Li-SOCl$_2$ battery. The IoT devices 101 may be configured to communicate 103, 104, 105 through a low-power wireless network 102. Such a low-power wireless network 102 may be based on a low-power wide-area, LPWA, protocol such as, for example, LoRaWAN, DASH7, Wize, Sigfox, Random Phase Multiple Access, RPMA, Weightless, or Narrowband-IoT. This allows the battery powered IoT devices 101 to transmit data over substantial distances for a substantial amount of time.

The metrics monitored by the IoT devices 101 may, for example, be production metrics in a factory, healthcare metrics in a hospital, traffic metrics in a city, agriculture metrics on a farm, or energy metrics in a power grid. The IoT devices 101 may transmit or communicate 103, 104, 105 data on these monitored metrics to a gateway 106. The gateway 106 may be configured to convert and forward data received from a first network 102 to a second network 111 that uses a different network protocol. For example, gateway 106 may be configured to convert a LPWA protocol used in telecommunications network 102 to an Ethernet-, LTE-, 3G-, 4G-, or 5G protocol used in telecommunications network 111.

By the gateway 106, the metrics monitored by the IoT devices 101 may be communicated 107 with a computing device 108. The computing device 108 may be configured to process the data monitored by the IoT devices 101. The computing device 108 may further be configured to transmit data to the IoT devices 101 and/or control the IoT devices 101. The data monitored by the IoT devices 101 may further be stored in a secondary memory or storage medium such as, for example, a database server 109 or a network attached storage, NAS. A control device 110 such as a desktop or a laptop can further provide an application and/or user interface to control the IoT devices 101 and/or monitor the data monitored by the IoT devices 101 by means of the computing device 108.

The energy consumption of the IoT devices 101 can vary substantially even if they are configured for the same purpose, e.g. due to their respective transmission distances to the gateway 106, due to the orientation of an antenna of the IoT devices 101, due to the orientation of an antenna of the gateway 106, or due to an object that disturbs or interferes with the data transmissions of the IoT devices 101. It can thus be desirable to determine the remaining energy of the respective batteries powering the IoT devices 101, as this can allow to determine when replacing or recharging of the respective batteries is due.

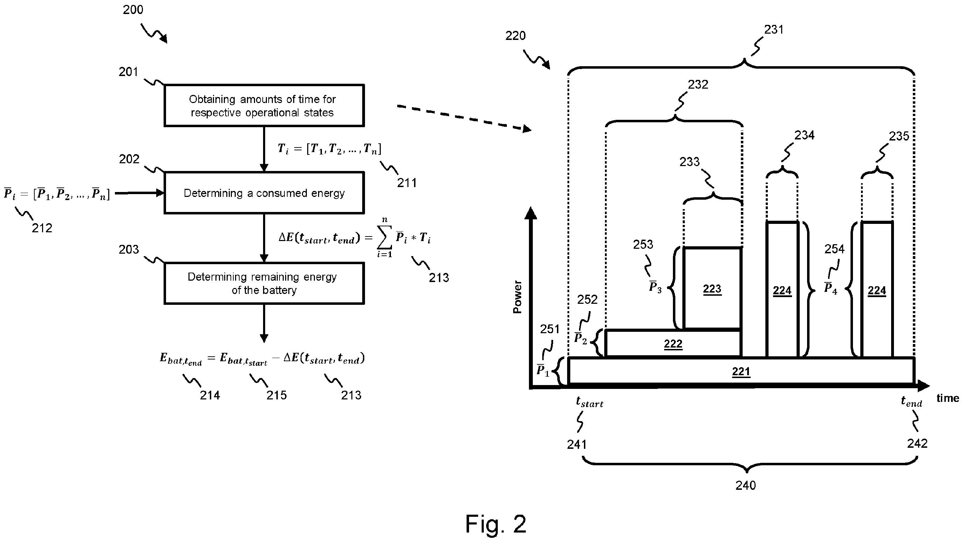

Fig. 2 shows steps 200 of a computer implemented method for determining a remaining energy of a battery powering an IoT device, according to an embodiment. The operation of the IoT device 220 is divided or categorized in distinct operational states 221, 222, 223, 224. An operational state of the IoT device may for example be related to, amongst others, transmitting data 224, receiving data 224, decoding data, executing one or more algorithms 222, operation of light-emitting diodes 223, LEDs, conducting measurements of a metric, a standby or sleep mode 221, or any other operational state of an IoT device known to the skilled person. The IoT device can operate in one or more operational states at the same time, as illustrated by operational states 221, 222, and 223 in Fig. 2.

In a first step 201, the amounts of time 231, 232, 233, 234, 235 that the IoT device operated in the respective operational states 221, 222, 223, 224 are obtained. Therefore, the IoT device is configured to track or log the amounts of time 231, 232, 233, 234, 235 that the IoT device operated in the respective operational states 221, 222, 223, 224 during an operational cycle 240, i.e. between $t_{start}$ 241 and $t_{end}$ 242. The amounts of time 231, 232, 233, 234, 235 indicate how long the IoT device operated in respective operational states 221, 222, 223, 224. The operational cycle 240 may have a fixed length, e.g. 24 hours. Alternatively, the operational cycle 240 may have a variable length, e.g. the start 241 and end 242 of an operational cycle may be triggered by an event. The amounts of time 231, 232, 233, 234, 235 may, for example, be structured as an array or a set $T_i = [T_1, T_2, ..., T_n]$ 211, wherein each amount of time $T_1, T_2, ..., T_n$ indicates the cumulative amount of time that the IoT device operated in a respective operational state 221, 222, 223, 224.

The amounts of time 231, 232, 233, 234, 235 may be logged by computer program code, e.g. software or firmware, running on the IoT device. This allows to reduce the circuitry and/or electronic components in the IoT device as no physical measurements on the battery are required to estimate its remaining energy, e.g. current measurements or voltage measurements. This has the further advantage that the IoT device can be made lighter, smaller, and cheaper.

In a following step 202, an energy 213 consumed by the battery powering the IoT device is determined based on the obtained amounts of time 211 and a predetermined characteristic power consumption 251, 252, 253, 254 for the respective operational states 221, 222, 223, 224. The predetermined characteristic power consumption may for example be, amongst others, an average power consumption, a median power consumption, or a maximum power consumption of the IoT device

during a respective operational state 221, 222, 223, 224. The predetermined characteristic power consumptions 251, 252, 253, 254 may be determined during a characterizing phase preceding the commissioning of the IoT device. For example, the predetermined characteristic power consumptions 251, 252, 253, 254 may be obtained experimentally by measuring the power consumption of the IoT device while operating in the respective operational states 221, 222, 223, 224. Alternatively, the predetermined characteristic power consumptions 251, 252, 253, 254 may be, amongst others, calculated power consumptions, modelled power consumption, estimated power consumptions, or power consumptions provide by a manufacturer of the IoT device.

The consumed energy 213 during the operation cycle 240 may then, for example, be determined by summing the products of the amount of time the IoT device operated in an operational state 221, 222, 223, 224 and the corresponding predetermined characteristic power consumption 251, 252, 253, 254 of that state, i.e. by

$$\sum_{i=1}^{n} \overline{P}_i * T_i$$

wherein $T_i = [T_1, T_2, ..., T_n]$ and $\overline{P}_i = [\overline{P}_1, \overline{P}_2, ..., \overline{P}_n]$ indicate the amounts of time and the predetermined characteristic power consumptions respectively.

In a next step 203, the remaining energy 214 of the battery at the end 242 of the operational cycle 240 is determined based on the consumed energy 213 during the operational cycle 240. The remaining energy 214 may, for example, be expressed as a battery capacity, as a percentage of the initial battery capacity, or as a percentage of the initial energy of the battery. The remaining energy 214 can, for example, be determined by subtracting the consumed energy 213 from the preceding remaining energy 215 of the battery, i.e. the remaining energy of the battery at the start 241 of the operational cycle 240. The preceding remaining energy 215 may be the determined remaining energy at the end of the preceding operational cycle, e.g. at $t_{start}$ - 1. Alternatively, the preceding remaining energy 215 may be the initial energy or initial charge of the battery, e.g. when determining the remaining energy 214 for a new or recharged battery. Alternatively or complementary, the remaining energy 214 can be determined by tracking a total consumed energy since the last battery replacement or battery charge and subtracting it from the initial energy of the battery.

This allows to determine the remaining energy of the battery from the IoT device with limited energy consumption. This has the advantage that the lifetime of the battery is extended and/or that cheaper batteries with a smaller capacity can be used. It is a further advantage that the computer implemented method is easily implemented into existing IoT devices.

The steps 200 of the computer implemented method may be performed by the IoT device. Thus, in addition to tracking the amounts of time, i.e. obtaining the amounts of time in step 201, the IoT device may also determine the consumed energy 213, i.e. perform step 202, and determine the remaining energy 214 of the battery that powers the IoT device, i.e. perform step 203. In other words, the steps 200 of the computer implemented method are performed locally on the IoT device. The IoT device may further be configured to transmit the determined remaining energy 214 to any other device, e.g. a device configured to monitor the remaining energy of IoT devices.

Alternatively, the steps 200 of the computer implemented method 200 may be performed by a computing device configured to communicate with the IoT device through a wireless network. The IoT device may transmit the tracked amounts of time 211 to the computing device which thereby obtains the amounts of time, i.e. performs step 201. The computing device may then perform the determining of the consumed energy 213 and the remaining energy 214, i.e. steps 202 and 203 respectively.

The IoT device may be configured to periodically transmit the tracked amounts of time 211 to the computing device, e.g. at the end 242 of operational cycle 240. The IoT device may transmit the logged amounts of time 211 through the wireless network, e.g. a telecommunications network. The IoT device may transmit the logged amounts of time 211 together with other data, e.g. metrics monitored by the IoT device. In other words, the logged amounts of time 211 may be included in a data packet that is transmitted to the computing device anyway, e.g. during data transmissions 224. This can further improve the energy efficiency of the IoT device as the IoT device does not have to wake up from a sleep mode or a standby mode 221 to transmit the amounts of time 211.

The computing device may be any suitable device that can communicate with the IoT device and is capable of performing the steps 200 of the computer implemented method such as, for example, a desktop, a laptop, a computing server, an IoT device, a network device, or any other suitable computing device known to the skilled person. Thus, the computer implemented method may be performed remotely, e.g. by means of cloud computing. This allows offloading the determining of the remaining energy of the battery from the IoT device, thereby further limiting the energy consumption associated with estimating the remaining energy of a battery. This has the further advantage that the lifetime of the battery is extended and/or that cheaper batteries with a smaller capacity can be used.

Such a computing device may further be configured to obtain amounts of time from a plurality of IoT devices through a wireless network. The computing device may thus obtain amounts of time 211 from respective IoT devices. To this end, each of the respective IoT devices may transmit the amounts of time 211 that the respective IoT devices operated in respective operational states 221, 222, 223, 224. The computing device may then determine the consumed energy 213 and the remaining energy 214 for the plurality of IoT devices. This allows monitoring the battery of a plurality of IoT devices in a wireless network.

The computer implemented method may further comprise determining an initial energy of the battery powering the IoT device. The initial energy may refer to the remaining energy in the battery upon first use of the battery, e.g. when starting to power an IoT device or when commissioning the IoT device. In other words, the initial energy may be the starting point or reference point, i.e. term 215, for determining the remaining energy 214 of the battery upon completion of the first operational cycle 240. The initial energy may, for example, be expressed as a discharge capacity.

The conditions under which the battery is charged prior to the first use, i.e. the charging conditions, and the conditions under which the battery is stored prior to the first use, i.e. the storage conditions, may substantially influence the initial energy of the battery. As such, the initial energy of the battery may be determined based on the charging conditions and/or storage conditions of the battery. This results in a more accurate initial energy. This further results in a more accurate determination of the remaining energy 214, as the accuracy of the initial energy may be propagated to all following determinations of the remaining energy 214.

The charging conditions may include, amongst others, the ambient temperature during charging, the charging current rate, the charging current, and/or the charge voltage. The storage conditions may include, amongst others, the ambient temperature at which the battery was stored, the state of charge at which the battery was stored, and the amount of time the battery was stored. The influence of the storage conditions on the initial energy of the battery may, for example, be determined by means of a calendar aging model for the used battery.

The computer implemented method may further comprise determining a usable energy of the battery based on one or more operational conditions of the IoT device. The usable energy may refer to a portion of the energy stored in the battery, i.e. the remaining energy, that can be used or discharged to power the IoT device under certain operational conditions. The usable energy may be equal to, or smaller than the remaining energy depending on the operational conditions of the IoT device. The usable energy may, for example, be expressed as a discharge capacity, or as a percentage of the remaining energy of the battery.

The operational conditions may, for example, include ambient temperature, discharge current rate, charge current rate, battery age, or any other condition that can influence the usable energy in a battery known to the skilled person. It will be apparent that the influence of the operational conditions on the usable energy may further depend on the composition of the used battery, e.g. the active materials of the battery, the electrode materials, the electrode thickness, the electrolyte composition, the amount of electrolyte, and the battery format.

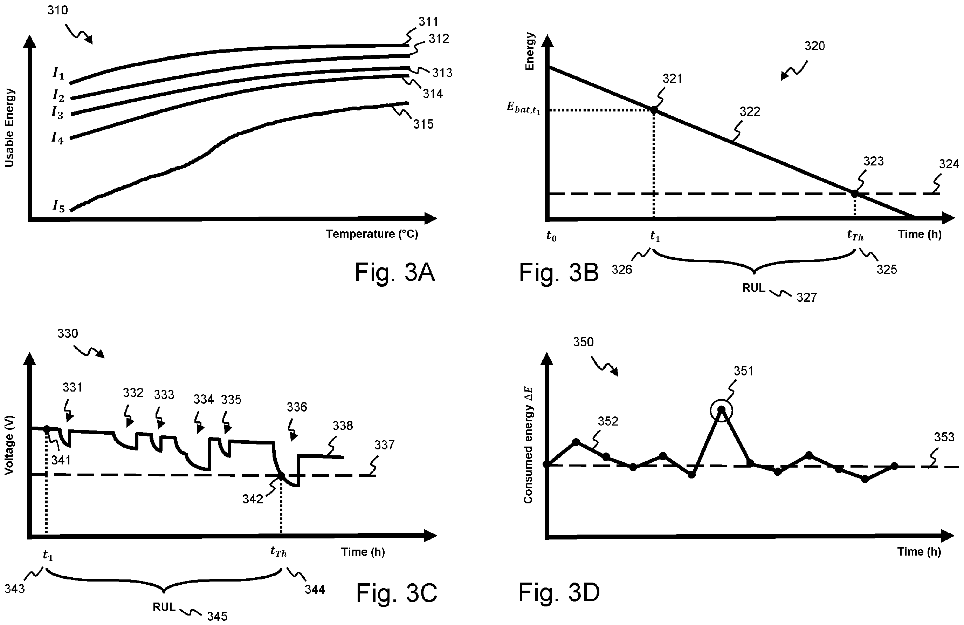

Fig. 3A shows an example 310 of the usable energy in a battery in function of ambient temperature and discharge current, i.e. the usable energy under different operational conditions. Curves 311, 312, 313, 314, 315 illustrate the usable energy when respectively discharging the battery at increasing currents $I_1$ - $I_5$ in function of the ambient temperature. Example 310 illustrates that the usable energy of a battery can drop substantially at low ambient temperatures and high discharge currents.

The operational conditions may be tracked by the IoT device, e.g. by measuring the ambient temperature near the IoT device. Alternatively, the operational conditions may be tracked by one or more sensors, other IoT devices, or any other device configured to monitor one or more operational conditions in the vicinity of the IoT device. If the remaining energy of the battery is determined by a remote computing device, the tracked operational conditions may further be transmitted to the computing device in addition to the amounts of time.

The computer implemented method may further determine the usable energy of a battery for different operational conditions. In other words, based on the determined remaining energy, a plurality of usable energies may be determined under different operational conditions. This can, for example, allow providing an overview of the usable energy of the battery under different operational conditions that might occur, e.g. when temperature remains stable, decreases, and increases during the succeeding operational cycle.

Fig. 3B shows an example 320 of a remaining useful lifetime 327 of the battery powering the IoT device. The remaining useful lifetime 327 of the battery may characterize the remaining time that the battery can continue to power the IoT device. The remaining useful lifetime 327 may, for example, be expressed in hours, days, weeks, or months. The remaining useful lifetime 327 may be characterized by the moment in time 325 when the remaining energy 322 of the battery drops below an energy threshold 324, i.e. a minimum energy for powering the IoT device. It will be apparent that the evolution of the remaining energy 322 illustrated in Fig. 3B is a simplified example, i.e. a linear decrease, and that the remaining energy 322 may follow a more complex evolution in time.

The computer implemented method may further comprise predicting the remaining useful lifetime 327 of the battery based on the remaining energy 322 of the battery and an expected load profile. For example, the remaining energy 321 may be determined at timestep $t_1$ and then, based on the remaining energy 321 and an expected load profile of the IoT device, the remaining useful lifetime 327 may be determined through extrapolation. The expected load profile of the IoT device may, for example, be an expected power consumption in time or a sequence of activated operational states in time.

The expected load profile may be forecasted based on one or more historical, i.e. previous, load profiles of at least one IoT device. For example, the expected load profile may be forecasted based on averaged historical load profiles of a plurality of IoT devices. These IoT devices may be substantially similar to the IoT device for which the expected load profile is forecasted. Alternatively, these IoT devices may be substantially different from the IoT device for which the expected load profile is forecasted. In this case, the historical load profiles may be normalized to allow forecasting the expected load profile for a different IoT device. Alternatively, the expected load profile may be forecasted based on the previous load profile of the IoT device for which the expected load profile is forecasted, i.e. the load profile of the IoT device itself up until the moment of performing the forecast.

Alternatively or complementary, the remaining useful lifetime 345 may be characterized by the moment in time when the voltage 338 of the battery drops below a voltage threshold 337, as illustrated in Fig. 3C. The voltage threshold 337 may thus characterize a minimum voltage of the battery required to power the IoT device, i.e. to power the electronic components of the IoT device. It is conceivable that the battery voltage 338 drops below the voltage threshold 337 even if there still is still sufficient remaining energy 322 to power the IoT device, i.e. remaining energy 322 still exceeds the energy threshold 324.

The voltage 338 of the battery may drop below the threshold 337 when one or more of the operational states of the IoT device are activated, e.g. when the IoT device starts transmitting data or when the IoT device starts executing an algorithm. The voltage drops 331 - 336 may be the result of the load current discharged from the battery to power the operational states. The magnitude of the voltage drop 331 - 336 may thus be related to the activated operational states as the respective operational states have a respective load current. For example, voltage drops 331, 333, 335 may be associated with conducting measurements by the IoT device; voltage drop 332 may be associated with executing an algorithm on the IoT device; and voltage drop 334 may be associated with two operational states that are activated during a same period. It will be apparent that the voltage drops 331 - 336 as illustrated in Fig. 3C are examples and that the actual voltage drops of a battery when powering an IoT device may have a substantially different shape and/or magnitude.

The magnitude of the voltage drop 331 - 336 may further be related to the internal resistance of the battery. The internal resistance of a battery may increase substantially as the remaining energy 322 of the battery decreases. As such, the magnitude of a voltage drop caused by an operational state may increase as the battery is discharged. This can limit the energy that can be discharged from the battery as the voltage threshold 337 can be reached more quickly than the energy threshold 324, in particular under certain operational conditions such as low temperatures which further increase the internal resistance of the battery.

As such, predicting the remaining useful lifetime 345 may include predicting when a voltage 338 of the battery drops below the voltage threshold 337 upon activation of one or more of the operational states based on the remaining energy of the battery and one or more operational conditions of the IoT device. This allows predicting the remaining useful lifetime 345 of the battery more accurately.

Fig. 3D shows an example 350 of the consumed energy 352 of the IoT device in time. The computer implemented method may further comprise detecting an unexpected change 351 in the consumed energy 352 of the IoT device. To this end, the consumed energy 352 may be monitored in time. The consumed energy 352 during preceding operation cycles may, but need not, be stored, e.g. by the IoT device or by the computing device.

Upon determining a consumed energy that deviates substantially from an expected consumed energy 353, e.g. the average consumed energy of the IoT device, an unexpected change 351 may be detected. An operator of the IoT device may be alerted of the unexpected change. This allows detecting IoT devices with an elevated power consumption, e.g. due to a malfunction, before a substantial amount of energy is drained from the battery. It is a further advantage that the operation of the IoT device is more reliable as an unexpected loss of signal due to a discharged battery can be avoided.

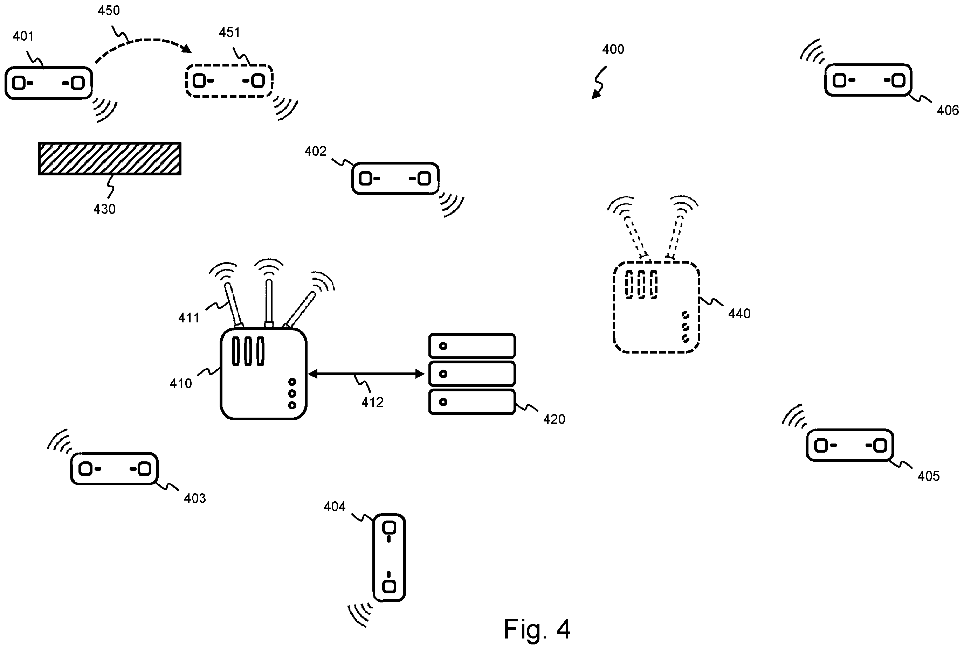

Fig. 4 shows an example network 400 of IoT devices 401 - 406 configured to communicate with a gateway 410 through a wireless network. The network 400 of IoT devices may, for example, be installed in an industrial facility such as a chemical plant. The IoT devices 401 - 406 may, for example, be configured to monitor the position of valves in the chemical plant. Therefore, the IoT devices 401 - 406 may transmit the monitored valve positions to a gateway 410 that forwards 412 the positions to a computing device 420. The gateway 410 may comprise one or more antennas 411 to transmit messages to, and receive messages from, the IoT devices 401 - 406. It will be apparent that the computing device 420 may be located at a substantial distance from the IoT devices 401 - 406 and/or the gateway 410, e.g. at a central location in the chemical plant or even located outside of the premises of the chemical plant.

The IoT devices 401 - 406 may each be configured to perform the computer implemented method described above for determining the remaining energy of the batteries powering the respective IoT devices 401 - 406. In other words, each IoT device 401 - 406 may determine the remaining energy of its own battery. Alternatively, a master IoT device, e.g. device 402, may be configured to determine the remaining energy of the batteries powering the respective IoT devices 401 - 406. In this case, the slave IoT devices in the network 400, e.g. devices 401, 403, 404, 405, 406, may transmit the amounts of time that the slave IoT devices operated in respective operational states to the master IoT device 402. Thereby,

the master IoT device 402 that determines the remaining energies obtains the amounts of time. Alternatively, the remaining energies of the batteries in the respective IoT devices 401 - 406 may be determined by the computing device 420. In other words, the computer implemented method described above may be performed by the computing device 420. To this end, the IoT devices 401 - 406 may transmit their respective amounts of time to the computing device through gateway 410.

Additionally, the remaining useful lifetime of the batteries powering the respective IoT devices 401 - 406 may be predicted as described above in relation to Fig. 3B and Fig. 3C. Based on the predicted remaining useful lifetimes, a maintenance of the IoT devices 401 - 406 may further be scheduled. The different IoT devices 401 - 406 may be scheduled for maintenance at different moments in time, may be scheduled for maintenance simultaneously, or may be scheduled for maintenance in groups. Maintenance of an IoT device 401 - 406 may comprise, amongst others, replacing of a primary battery powering the IoT device, or recharging a secondary battery powering the IoT device.

In doing so, the maintenance of the IoT devices 401 - 406 can be scheduled during a period in which the operation of the IoT device 401 - 406 is superfluous, i.e. optional or non-critical. Such a period may, for example, be a period during which scheduled maintenance is performed to a device or process monitored by the IoT device 401 - 406, or a period during which a device or process monitored by the IoT device 401 - 406 is not operational. For example, when the chemical plant is not operational due to general maintenance. This allows to perform maintenance of the IoT devices 401 - 406 without losing data on the metrics monitored by the IoT devices. It is a further advantage that loss of signal from the IoT devices due to a discharged battery can be avoided.

The power consumption of the IoT devices 401 - 406 may further be optimized based on a comparison between the consumed energy of the IoT devices 401 - 406 and the consumed energy of other IoT devices. In other words, the energy consumption pattern of an IoT device may be compared to the energy consumption pattern of reference IoT devices, i.e. other IoT devices, to identify adjustments to optimize the power consumption of the IoT device. This has the further advantage that the lifetime of the battery can be extended and/or that cheaper batteries with a smaller capacity can be used.

These reference IoT devices may be substantially similar to the IoT device for which the power consumption is optimized. For example, the energy consumed by IoT device 402 may be compared to the consumed energy of reference IoT devices 401, 403, 404, 405, 406, which are all configured to monitor valve positions in a chemical plant. Alternatively, these reference IoT devices may be substantially different from the IoT device, i.e. IoT devices configured for a different purpose such as for example monitoring chemical processes in the chemical plant. In this case, the consumed energy of

the reference IoT devices may be normalised to allow comparing with the energy consumption of the IoT device. Additionally, the reference IoT devices may not be included in the network 400 of IoT devices for which a power consumption of an IoT device 401 - 406 is optimized. For example, the energy consumed by IoT device 402 may be compared to the consumed energy of reference IoT devices installed in a parcel distribution centre.

The power consumption of an IoT device may, for example, be optimized by adjusting the IoT device, by adjusting the network 400 of IoT devices, or by adjusting the surroundings of the IoT device. Adjusting the IoT device 401 - 406 may for example include, amongst others, adjusting its transmission settings, adjusting the transmission frequency, adjusting the measurement frequency, adjusting data storage settings, changing its antenna, or adjusting the orientation of the antenna.

Adjusting the network 400 of IoT devices may, for example, include adjusting the topology of the network, adjusting the nodes in the network, adjusting the location of the nodes in the network, or adjusting the configuration of the nodes in the network. The nodes in the network may, for example, be an IoT device 401 - 406, a gateway 410, or a computing device 420. For example, the power consumption of IoT devices 405 and 406 may be optimized by adding an additional gateway 440 to the network 400, by adding antennas 411 to gateway 410, by changing the orientation of the antennas 411, or by relocating the gateway 410.

Adjusting the surroundings of the IoT device may, for example, include removing or repositioning an object 430 that disturbs or interferes with data transmissions of the IoT device. For example, the transmissions of IoT device 401 may be disturbed by an object 430 such as a container, thereby resulting in a higher energy consumption by IoT device 401 due to poor data transmission. To optimize the power consumption of IoT device 401, the IoT device may be relocated 450 to a new position 451, or the object 430 may be removed or repositioned such that it disturbs the transmissions of IoT device 401 less.

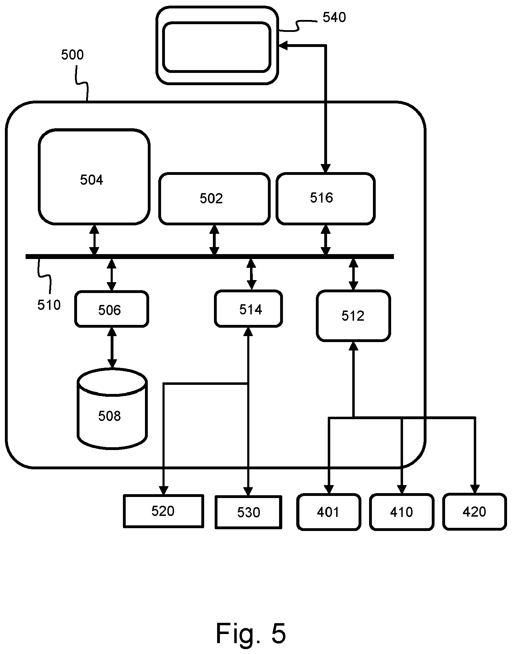

Fig. 5 shows a suitable computing system 500 enabling to implement embodiments of the above described method according to the invention. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems such as for example, amongst others, one or more IoT devices 401, one or more gateways 410, and/or a computing device 420. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, etc. could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A computer implemented method (200) for determining a remaining energy (214) of a battery powering an internet of things, IoT, device; the method comprising:

   - obtaining (201) amounts of time (231, 232, 233, 234, 235) that the IoT device operated in respective operational states (221, 222, 223, 224);
   - determining (202) a consumed energy (213) based on predetermined characteristic power consumptions (251, 252, 253, 254) of the IoT device in the respective operational states and the amounts of time operated therein; and
   - determining (203) the remaining energy (214) of the battery based on a preceding remaining energy (215) of the battery and the consumed energy (213).

2. The computer implemented method according to claim 1, further comprising determining an initial energy of the battery based on one or more charging conditions and/or storage conditions of the battery.

3. The computer implemented method according to any of the preceding claims, further comprising determining a usable energy of the battery based on the remaining energy (214) and one or more operational conditions of the IoT device.

4. The computer implemented method according to any of the preceding claims, further comprising detecting an unexpected change (351) in the consumed energy (352) of the IoT device.

5. The computer implemented method according to any of the preceding claims, further comprising optimizing a power consumption of the IoT device based on a comparison between the consumed energy of the IoT device and the consumed energy of at least one other IoT device.

6. The computer implemented method according to any of the preceding claims, further comprising predicting a remaining useful lifetime (327, 345) of the battery based on the remaining energy (321) of the battery and an expected load profile of the IoT device.

7. The computer implemented method according to claim 6, wherein the remaining useful lifetime (327, 345) of the battery is **characterized by** the moment in time (325, 344) when the remaining energy (322) of the battery drops below an energy threshold (324) and/or a voltage (338) of the battery drops below a voltage threshold (337).

8. The computer implemented method according to claim 6, further comprising forecasting the expected load profile of the IoT device based on one or more previous load profiles of at least one IoT device.

9. The computer implemented method according to claim 6, further comprising scheduling a maintenance of the IoT device based on the predicted remaining useful lifetime (327, 345) of the battery.

10. The computer implemented method according to any of the preceding claims, wherein the computer implemented method is performed by the IoT device (401, 402, 403, 404, 405, 406).

11. The computer implemented method according to any of claims 1 - 9, wherein the IoT device (401, 402, 403, 404, 405, 406) is configured to transmit the amounts of time to a computing device (420) through a wireless network; and wherein the computer implemented method is performed by the computing device.

12. A computing device (402, 420) configured to perform the computer implemented method according to any one of claims 1 to 9.

13. A computing device according to claim 12, wherein the computing device (402, 420) is configured to obtain the amounts of time from one or more IoT devices (401, 402, 403, 404, 405, 406) through a wireless network.

14. A computer program comprising instructions which, when the program is executed by a computer, cause the computer to perform the computer implemented method according to any of claims 1 to 9.

15. A computer-readable medium comprising instructions which, when executed by a computer, cause the computer to perform the computer implemented method according to any one of claims 1 to 9.

Fig. 1

EP 4 329 382 A1

200

201

Obtaining amounts of time for
respective operational states

$$T_i = [T_1, T_2, \ldots, T_n]$$

211

202

$$\overline{P}_i = [\overline{P}_1, \overline{P}_2, \ldots, \overline{P}_n]$$

Determining a consumed energy

212

$$\Delta E(t_{start}, t_{end}) = \sum_{i=1}^{n} \overline{P}_i * T_i$$

213

203

Determining remaining energy
of the battery

$$E_{bat,t_{end}} = E_{bat,t_{start}} - \Delta E(t_{start}, t_{end})$$

214        215        213

220

231

232

233        234        235

253

$\overline{P}_3$

223        224        224

252

$\overline{P}_2$

222

251

$\overline{P}_1$

221

254

$\overline{P}_4$

Power

$t_{start}$        $t_{end}$        time

241        242

240

Fig. 2

Fig. 3A

Fig. 3B

Fig. 3C

Fig. 3D

Fig. 4

EP 4 329 382 A1

Fig. 5

EP 4 329 382 A1

Europäisches Patentamt

European Patent Office

Office européen des brevets

# EUROPEAN SEARCH REPORT

Application Number

EP 22 19 2063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/047254 A1 (HA WAI-LEUNG [HK] ET AL) 13 February 2014 (2014-02-13) | 1,3, 12-15 | INV. H04W52/02 G06F1/28 G06F1/3212 G06F1/3209 |
| A | * paragraphs [0036], [0048], [0049] * | 2,4-11 | |

TECHNICAL FIELDS SEARCHED (IPC)

H04W
G06F

The present search report has been drawn up for all claims

| Place of search | Date of completion of the search | Examiner |
|---|---|---|
| The Hague | 6 February 2023 | Amorotti, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 2063

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2023

| Patent document cited in search report | Publication date | Patent family member(s) | Publication date |
|---|---|---|---|
| US 2014047254 A1 | 13-02-2014 | DE 102013108346 A1 | 13-02-2014 |
| | | GB 2506254 A | 26-03-2014 |
| | | GB 2515424 A | 24-12-2014 |
| | | US 2014047254 A1 | 13-02-2014 |

EPO FORM P0459

For more details about this annex : see Official Journal of the European Patent Office, No. 12/82